# EUROPEAN PATENT APPLICATION

(11) **EP 3 576 059 A1**
(43) Date of publication of application: **04.12.2019**
(21) Application number: 18175649.5
(22) Date of filing: 01.06.2018
(51) Int. Cl.: G07F 17/12, G06Q 10/00

(54) **METHOD AND APPARATUS FOR CONSUMER RETURNS**

(71) Applicant: Doddle Parcel Services Limited, London EC3N 3DS (GB)
(72) Inventor: O'CONNOR, Gary, London EC3N 4DS (GB); RODWAY, Ben, London EC3N 4DS (GB)
(74) Representative: Lawrence, Richard Anthony

(57) **Abstract**

A returns kiosk for receiving and processing customer returns is described. A customer user interface is adapted for a customer to enter a return identifier for a customer return. A label printer is adapted to print a return specific label for the customer return from the return identifier. A parcel posting mechanism is adapted to receive a customer return with an affixed return specific label. A parcel collection well is adapted to store parcels posted through the parcel posting mechanism. A controller is adapted for control of the returns kiosk. The returns kiosk is adapted for communicating with a returns server for processing of customer returns. A returns system comprising a returns server, one or more such returns kiosks, and one or more handheld terminals is also described, as is a method of processing a customer return in a computerised returns system utilising a returns kiosk.

## Description

### Field of Invention

The present disclosure relates to method and apparatus for consumer returns, being products purchased by a consumer but subsequently returned to the retailer by the consumer. Embodiments relate to physical return of items purchased online or in store.

### Background of Invention

In conventional bricks and mortar retail stores, purchase of items is made in store and return of purchased items is also an in store, person to person process. This process is relatively labour intensive and typically requires a special counter and special processes. While the retailer can achieve reasonable confidence that a consumer return is legitimate, the process is essentially pure overhead for the retailer, who only benefits reputationally.

Online retailing presents different challenges for customer returns, as performing a return process at a physical site convenient for the retailer and the customer may be impractical or impossible. Typically an item will be posted back by a customer to an online retailer for a refund, but as the customer and the retailer are inspecting the return item at different times, disagreements between customers and retailers may be difficult to resolve, and the retailer may need to choose between a return process open to customer abuse in order to maintain reputation or a more restrictive process less open for abuse but more likely to lead to customer dissatisfaction.

Many retailers have both an online and bricks and mortar presence. While making a bricks and mortar return of items purchased online appears superficially attractive, it may in practice be very challenging for the retailer. Bricks and mortar and online stores will have very different workflows and may access different stock - returned online stock may need to be returned to the online business, or if it is not and the bricks and mortar and online businesses are separate, the stock may need to be acquired by one business from the other.

Customer returns - particularly customer returns of online purchases - are a significant and complex element in retailing logistics. Some attempts have been made to provide processes which are simpler for consumers - for example, by logging a request for a return online in a system which allows a user to print a return label which can then be affixed to a return parcel, which can then be dropped at a consignment service location - but this approach is not especially convenient for customer or retailer, and still offers the potential for abuse.

It would be desirable to provide a customer return method, and suitable apparatus for implementing the method, that provided ease of use for both customer and retailer, and which was able to reassure the consumer that prompt refunds would be available for legitimate refunds and to reduce retailer effort in determining that returns were indeed legitimate.

### Summary of Invention

In a first aspect, the invention provides a returns kiosk for receiving and processing customer returns, comprising: a customer user interface for a customer to enter a return identifier for a customer return; a label printer to print a return specific label for the customer return from the return identifier; a parcel posting mechanism to receive a customer return with an affixed return specific label, and a parcel collection well to store parcels posted through the parcel posting mechanism; and a controller for control of the returns kiosk; wherein the returns kiosk is adapted for communicating with a returns server for processing of customer returns.

This approach provides for convenient physical return of purchased items without a customer needing to use postal or courier services, with their associated costs. Use of this approach can provide a number of additional benefits to customers and to retailers, as are discussed further below.

In embodiments, the customer user interface comprises a touchscreen interface. This may for example be comprised in a tablet computer retained within the returns kiosk.

The customer user interface may comprise an optical code scanning system, wherein the return identifier is obtainable from an optical code to be scanned by the optical code scanning system.

The parcel posting mechanism may comprise a blocking mechanism to prevent access to the parcel collection well when a parcel is posted. It may also comprise a lockable access door, in embodiments one which is openable by scanning of an optical code printed on the return specific label.

The parcel posting mechanism maycomprises sensors for use in determining whether a valid return has been made - these may include at least one camera.

The parcel collection well may be separately lockable, for example it may comprise an NFC enabled lock.

The parcel collection well may comprise one or more sensors to measure a state of the parcel collection well - in particular, the sensors may provide a measure of how full the parcel collection well is.

The returns kiosk may be adapted to communicate with the returns server to obtain information to print the return specific label from the return identifier, and may be adapted to provide returns kiosk state information to the returns server.

In a second aspect, the invention provides a customer returns processing system, comprising: one or more returns kiosks as indicated above in relation to the first aspect of the invention, one or more handheld terminals adapted to run a returns process application, and a returns server adapted to process customer returns by communicating with the returns kiosks to provide and receive customer return information and with the handheld terminals to provide customer return information (including notifications).

The returns server may be adapted to communicate with a retailer computing system to establish a return identifier for a return to that retailer. The returns server may be adapted to determine a return outcome for a return, and may also be adapted to communicate the return outcome to the handheld terminal.

The customer returns processing system may also be adapted to notify a logistics system of a return, of the return outcome for the return, and of when the return has been identified at the handheld terminal.

In a third aspect, the invention provides a method of processing a customer return in a computerised returns system utilising a returns kiosk, comprising: establishing a return identifier for a customer return; at a returns kiosk, receiving the return identifier, printing a return specific label for the customer return based on the return identifier, and receiving a customer return with an affixed return specific label; determining a return outcome for the customer return; and sending a notification to a handheld terminal, wherein the notification indicates the returns kiosk where the customer return is held and the return outcome.

Establishing the return identifier may comprise receiving details of an intended return from a retailer computing system at the returns server, and establishing from the details of the intended return the return identifier. Alternatively, establishing the return identifier may comprise receiving the return identifier from a retailer computing system, wherein the return identifier is generated during a retailer returns process.

The return identifier may be stored within an optical code, and receiving the return identifier at the returns kiosk may comprise scanning the optical code.

Printing the return specific label maycomprise printing a return specific optical code on the return specific label, and receiving the return at the returns kiosk may comprise unlocking a lockable access door for the returns kiosk by scanning the return specific optical code. The handheld terminal may also be adapted to retrieve the return outcome by scanning the return specific optical code.

The handheld terminal may be adapted to open a lockable door of the returns kiosk to retrieve a return.

### Brief Description of Figures

Embodiments of the invention will now be described, by way of example, with reference to the accompanying Figures, of which:
Figure 1 shows a system for making and managing customer returns according to an embodiment of the invention;
Figure 2 shows an embodiment of a return kiosk for use in the system of Figure 1;
Figures 3, 4 and 5 illustrate the returns kiosk of Figure 2 viewed to display different features of the kiosk;
Figure 6 shows schematically a kiosk interface system for the returns kiosk of Figure 2;
Figure 7 shows schematically a physical access and control system of the returns kiosk of Figure 2;
Figure 8 shows schematically functional elements of a staff terminal for use in the system of Figure 1; and
Figure 9 is a flow diagram illustrating a returns process in accordance with an embodiment of the invention.

### Description of Specific Embodiments

General and specific embodiments of the invention will be described below with reference to the Figures.

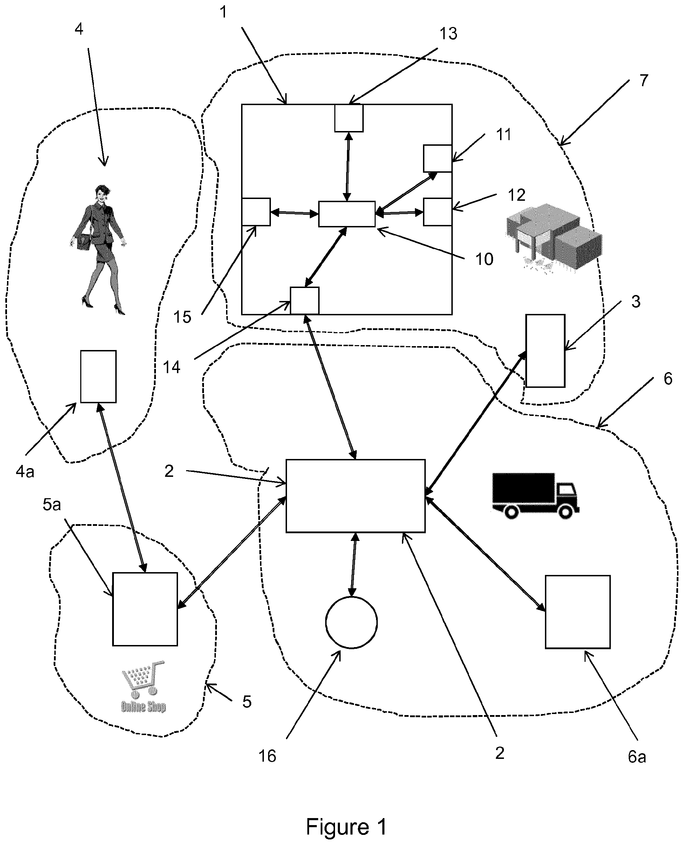

Figure 1 describes a system for making customer returns according to an embodiment of the invention. Different system functions are shown at a general level together with significant system elements.

The main system elements are returns kiosk 1, returns server 2 and staff terminal 3. The customer 4 will physically interact with the returns kiosk 1 in order to return product. The returns kiosk 1 may be on the premises of a retailer 5 or a logistics provider 6 - staff members of whichever of these is attending to the returns kiosk 1 will use the staff terminal 3 - these are shown as being under retailer/provider 7 operational control. The return server 2 will typically be implemented as a cloud-based platform (and need not correspond to any specific item of hardware) under control of the logistics provider 6 - the returns server 2 will interact with both logistics provider systems and retailer systems, as well as with the returns kiosk 1 and the staff terminal 3.

The returns kiosk 1 comprises a hardware controller 10, which controls sensors 11 (including a camera, as will be described below) and locking systems 12, together with an optical code scanning system 13. The controller 11 also interacts with a tablet computer 14 providing a touchscreen user interface system and a label printing system 15. In the arrangement shown, communication with the returns server is mediated by the tablet computer 14. The returns server 2 interacts with a number of systems. These include retailer computing systems 5a, logistics provider systems 6a, and support technologies such as video analytics system 16. The returns server 2 also interacts with the staff terminal 3. A customer computing device 4a will communicate with typically communicate with a retailer computing system 5a.

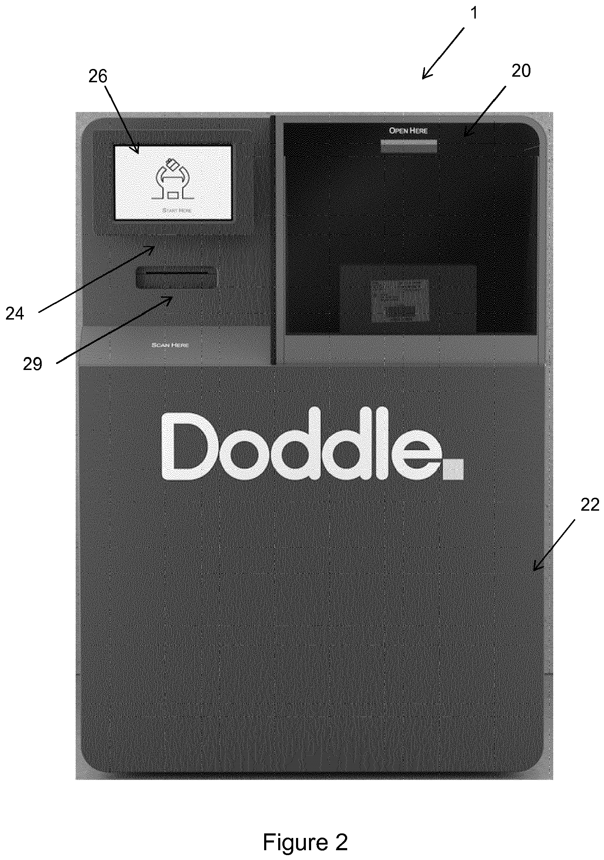

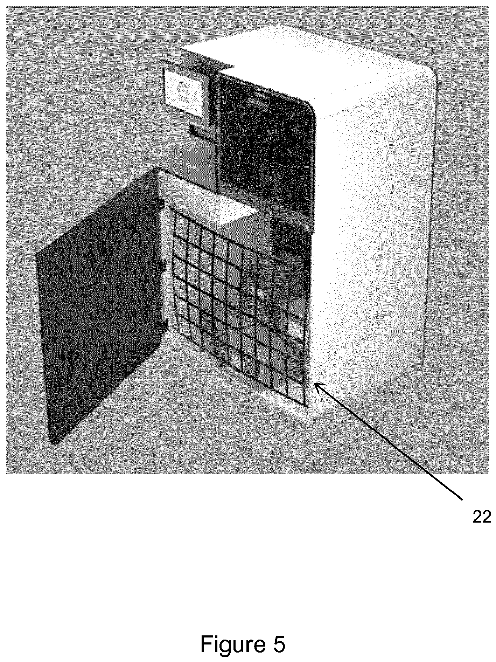

Figures 2 to 5 show an exemplary physical implementation of a returns kiosk 1 for use in the system of Figure 1. The returns kiosk 1 has a parcel return section 20 and a parcel collection well 22, both in a generally locked state - the parcel return section 20 is openable by the customer at the correct stage in the parcel return process, and the parcel collection well is openable by an authorized collector of parcels, as will be discussed below. The returns kiosk 1 has a touchscreen interface 26 and an optical code scanner 24. A fanfold printer 28 is in communication with the touchscreen interface 26 and the code scanner 24 to print a return label appropriate to the parcel for return which is dispensed through label output slot 29 to be fixed to the parcel before it is placed in the parcel return section 20.

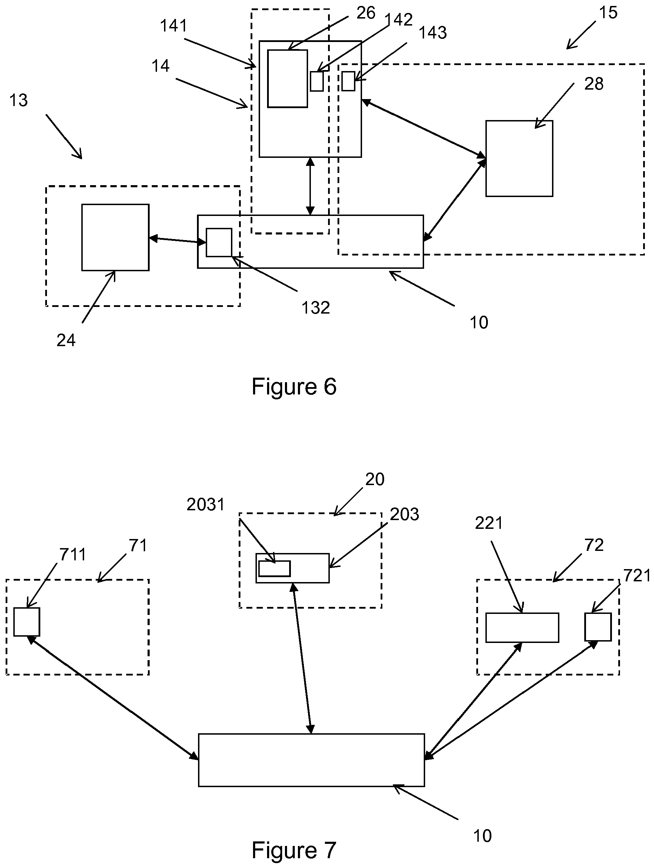

All of these system functions and system elements will now be described in greater detail with reference to Figures 1 to 5 described above and also Figures 6 to 8. Operation of the system to allow a customer to make a customer return will described in greater detail after the system elements have been introduced.

Elements of the returns kiosk 1 itself will now be described in more detail, beginning with the kiosk interface system shown in Figure 6. This comprises the controller 10, the optical code scanning system 13 comprising a code scanner 24 and a scanning application 132 performed at the controller 10, a tablet computer 14 comprising in this case a user interface system 141 (which provides the touchscreen interface 26) communicating with the controller 10, and a label printing system 15 comprising a fanfold printer 28 driven from the controller 10 or the tablet computer 14.

The controller 10 may be a conventional embedded computing device comprising a processor adapted to run applications for control of the returns kiosk and for interaction with the embedded tablet computer 14 which communicates with the returns server 2. It needs to be connected to the different elements of the returns kiosk 1 that it controls or receives information from - typically with a wired connection, though wire replacement technologies could also be used - and by any appropriate networked connection to the returns server 2. The functionality of the controller 10 is generally determined by the applications that it runs, which will be discussed in connection with the different system elements interacting with the controller 10. In embodiments, this functionality may be distributed with other system components - for example, if the touchscreen interface 26 is implemented by an embedded tablet computer 14, this may be used to run at least some of the applications used by the returns kiosk system rather than the controller 10.

The optical code scanning system 13 may be a conventional off-the-shelf scanning system, preferably one adapted to scan both 1-D barcodes and 2-D barcodes (such as QR codes), with the scanning application 132 adapted to interpret whichever type of barcode is scanned so that its information payload can be used by the returns kiosk system as will be described below. In embodiments, the scanning application 132 may run at the embedded tablet computer 14 rather than at the controller 10. As will be described below, this information payload is used to provide information relating to the return to allow both label generation and information needed for further processing of the return.

The touchscreen user interface system is here implemented by an embedded tablet computer 14 providing the touchscreen interface 26, the tablet computer 14 being in communication with the controller. The tablet computer runs a user interface program 142 adapted to display instructions and information to a user and to accept user input from the touchscreen, and in this case also is adapted to run the scanning application 132 to interpret the barcode content and the printer driver 143 to control label printing at the fanfold printer 28. The tablet computer 14 may run a standard operating system such as Android, with this functionality built over it using conventional Android programming techniques and APIs. In addition to providing any necessary user input associated with the returns process, as discussed further below, the touchscreen interface 26 may display advertising to the user, and this information may be personalised to the user or to the return once a return process has begun.

The label printing system 15 comprises a fanfold printer 28 driven from the controller 10 or the tablet computer 14 through an appropriate printer driver (which may be provided by the operating system of the relevant computer). This may be a conventional label printer, designed to produce output as single adhesive labels for application to a parcel to be returned dispensed through label output slot 29 - it may be desirable to augment this, if not provided within a conventional printer, with a detection mechanism to determine when the number of available labels is low, and to provide a route for this information to the controller 10 so that it can be reported back to the returns server 2.

The physical access and control system of the returns kiosk 1 is shown in Figure 7 - this is implemented by the controller 10 in communication with sensors 11 and locking systems 12, and will typically involve this system interacting with the staff terminal 3. There are three main access points to the returns kiosk 1 - a side access 71 primarily for access to the printing system (and, if necessary, for access to the tablet computer 14 and the controller 10), the parcel return section 20, and the access 72 to the parcel collection well 22.

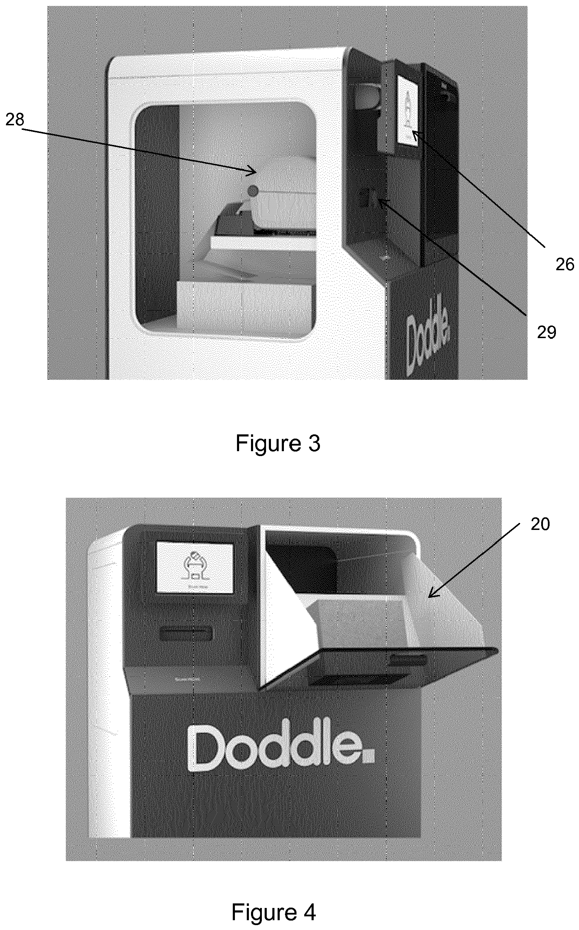

The side access 71 is shown removed in Figure 3 - Figure 4 shows the normal position with the side access 71 closed. The side access 71 is only used for printer refilling and maintenance and allows access to sensitive systems of the returns kiosk 1, so this is typically locked and can only be opened by an authorised party. A convenient way to implement this is by an NFC-enabled lock 711. The NFC-enabled lock 711 comprises a small NFC system in communication with (or controlled by) the controller 10 which is adapted to cause the lock mechanism to open when a security protocol is satisfied, such as by receiving an appropriate credential from the NFC device interacting with the NFC-enabled lock. Typically this NFC device will be the staff terminal 3 but may be, for example, a dedicated dongle. The interaction may be similar to, for example, the interaction at an NFC-controlled ticketing gate and may use conventional off-the-shelf technologies.

There are different considerations with parcel return section 20 - this needs to be used for parcel delivery, but should not allow access to the parcel collection well 22, and preferably will also only allow a parcel to be deposited at the correct point in the process to minimise the likelihood of parcels being incorrectly deposited. Prevention of access to the interior can be achieved by the normal mechanism of providing a two stage deposition process by using a door mechanism that only allows access to an internal ledge 202 when the parcel returns section door 201 is opened, with the parcel then falling into the parcel collection well 22 only when the parcel returns section door is closed. Parcel returns section door 201 may have an associated lock 2011 which is normally in a closed state - this may unlock, for example, for a short period of time after printing of a label, or of scanning of the parcel after the label has been placed on it. There is a parcel returns sensor system 203 - while this may be a simple sensor to detect the presence or absence of a parcel (a sensor on the ledge 202 measuring weight, or a simple light sensor), it may also be a more sophisticated sensor such as a camera 2031. Providing a camera 2031 as a sensor allows for more sophisticated analysis of the return made to determine that it is legitimate - this may be carried out by video analytics at the returns server 2, as will be described below.

The third access is the access 72 to the parcel collection well 22. This may again be implemented by an NFC-enabled locking mechanism 721, as described for the side access 71. It is also desirable to have a sensor system 221 in the parcel collection well to determine how full the parcel well is - this may be implemented by one or more depth sensors located at the side of the well. As will be described below, if the parcel collection well is becoming too full, an alert may be sent to the staff terminal 3 to prompt a parcel pick up from the returns kiosk 1. Again, both locks and sensors may have a wired connection to the controller 10.

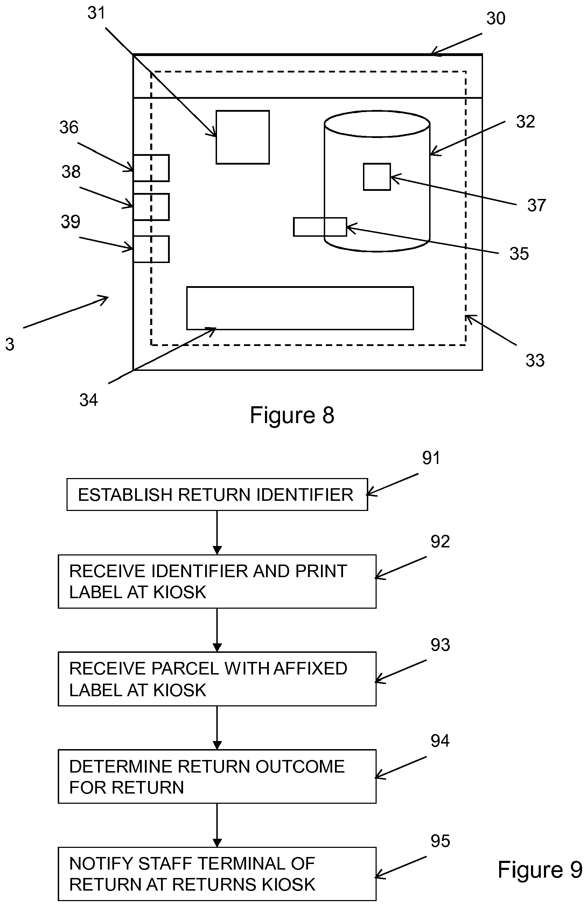

Functional elements of the staff terminal 3 are shown in Figure 8. In principle, this may be any type of mobile computing device - such as a smartphone or a general purpose tablet computer - but a particularly suitable choices is a mobile computer adapted for logistics use, such as those produced by Zebra Technologies. The staff terminal 3 has a processor 31 and memory 32 defining a processing environment 33 running an operating system 34 - which may be a conventional operating system such as Android, with a user interface 30. The staff terminal 3 runs a kiosk management application 35 through which it receives alerts as to when action is needed at the returns kiosk 1 and through which it can interact with returns server 2. The staff terminal 3 will also have NFC capability 36 to allow interaction with the NFC-enabled locks, and may have one or more credentials 37 stored in memory - one such credential may be to enable the staff terminal 3 to open the NFC-enabled locks, another may allow the staff terminal 3 to be authenticated to the returns server 2. The staff terminal 3 will have networking capability 38 - this may comprise local wireless networking and/or cellphone connectivity - to communicate with the returns server 2. The staff terminal 3 will desirably itself have scanning capability 39 so that the user can scan a parcel obtained from the parcel collection well 22 and receive directions from the returns server 2 for disposition of that parcel.

The returns server 2 interacts with the returns kiosk 1 through the controller 10 and with the staff terminal 3, and so provides management for the returns process. The returns server 2 may be implemented on any suitable computing system adaptable to act as a server for management of this process, and for interaction with retailer systems and logistics systems as necessary through appropriate communication newtworks. The returns server 2 may also incorporate or have access to support systems such as video analytics system 16 which may be invoked by the returns server 2 to determine whether a legitimate return has been made, as will be described below. Functionality of the returns server 2 will be described further in connection with the process description of a return that follows below.

A returns process according to an embodiment of the invention is described in general terms in Figure 9. The method is implemented in a computerised returns system utilising a returns kiosk 1, mediated by computing apparatus - in embodiments described, this is primarily by a returns server 2. Firstly, it needs to be established that a return is to take place - this may involve retailer processes, but specifically involves establishing 91 a return identifier for a customer return - this may comprise details of the return, or it could be a way for the details of the return to be accessed (typically from returns server 2). At a returns kiosk, the return identifier is received and a return specific label for the customer return is printed 92 based on the return identifier. The customer return is then received 93 with an affixed return specific label - the customer return may for example be posted into a locked section of the returns kiosk 1. A return outcome for the customer return will be determined 94. A notification will then be sent 95 to a handheld staff terminal 3, the notification indicating the returns kiosk where the customer return is held and the return outcome, so that the parcel can be collected by the user of the staff terminal 3 and processed appropriately.

A specific embodiment of a returns process will now be described with reference to the system elements described above. The returns server 2 can be implemented on a conventional server architecture, and it can be assumed that retailer systems and logistics systems will also be implemented on a conventional server architecture. The client device can be assumed to be any computing device routinely available to a consumer, such as a home personal computer, mobile computer, tablet or smartphone. The interaction between retailer server and consumer computing device can be assumed to be client/server, as can the interaction between the returns server 2 and the staff terminal 3.

A first step in the process is establishing that a return is required. This may be mediated through a retailer website by an appropriate option in the retailer online store - existing online stores will typically allow a customer to indicate that an ordered item is to be returned, and the website may then provide the customer with an indication of what information should be provided by the customer when posting or couriering the returned order back to the retailer, or in some cases in returning the item to the customer services desk of an associated bricks and mortar store.

In embodiments described here, the website will provide information to allow the return to be made - generally described here as a return identifier, though this may comprise an identifier that allows subsequent lookup of information from the returns server, one that itself contains information needed in processing the return, or some combination of the two. This information may or may not be provided explicitly in communication to the user, but will be provided in the form of an optical code to be processed at the returns kiosk. This optical code may in principle be a 1-D barcode, a 2-D barcode such as a QR code, or a glyph of some kind.

While this process is performed at a retailer website, if it is established at this point that there is a customer return to be made that will be performed through the returns kiosk system, the retailer server may at this point notify the returns server of the return identifier and any other relevant information for processing of the return - such as for example an indication of an end destination for the return (whether it should be kept for resale in store, returned to a central warehouse, or directed to another destination) or even a retailer part of a logistics workflow for the return. This allows the returns server to store information relating to expected returns in a database so that an appropriate label can be printed and an appropriate logistics workflow determined. It may even be possible for the retailer to send updates so that a return not yet physically received can be sent to an alternative destination.

Alternatively, the logging of the return (and generation of an optical code) is a step which may in embodiments be taken at the returns kiosk 1 itself. If the customer has not already processed the return through their own computing device, it may be possible for them to do this using the touchscreen interface 26 of the embedded tablet computer 14. The opening screen of the touchscreen interface 26 - which will be configured to run the user interface program 142 during normal use - will request a user to indicate whether or not a return code has been obtained. If the answer to this is "no", the user will be able to process the return at the returns kiosk itself. The next step may be to provide a menu of retailers signed up to use the returns service for the customer to make the appropriate selection. Where the retailer has a website with a return logging facility, the customer may be directed to that website to proceed (by logging in, or by providing order details, or both) to generate an optical code on that website, or alternatively by bypassing the scanning step (discussed below) and directly printing a label (as discussed further below). Where the retailer does not have a website with that facility - for example, if the retailer is a bricks and mortar retailer - the customer will be directed to a returns service website configured so that the information necessary for providing a return to that retailer can be collected from the consumer through the touchscreen interface 26. When this information is collected, an optical code can be generated or a label printed as before.

If an optical code is required to progress the returns process, this is now scanned at the code scanner 24 for processing by the controller 10 or the embedded tablet computer 14, depending on how the returns kiosk 1 is configured. This enables information necessary to print a returns label to be returned - this information may be explicitly present in the information provided by the optical code, or it may be obtainable by using the return identifier to access that information from the returns server 2.

At this stage, information to print a return label is available at the returns kiosk 1 - in the embodiment shown, printing is managed through the embedded tablet computer 14, and this drives printing of a label by the fanfold printer 28 - this label is then dispensed through label output slot 29 to be removed by the customer for fixing to the return. The label itself will contain any information needed for use in downstream logistics processes - while these will typically include an address and the return identifier, these may be provided in written form or as optical codes as appropriate. Typically, this may involve a written address and further return related information in the form of an optical code (which may be the same optical code as used to obtain the return label, or may be a different optical code if the requirements of the downstream logistics process are different).

Different approaches may be taken to packaging of the item to be returned. This may be returned in resealed original packaging, or in consumer chosen packaging. Alternatively, the customer may be able to bring the item for return to the returns kiosk unpackaged, and packaging may be provided at the returns kiosk. Another approach may be for the item to be unpackaged altogether. In the case of an unpackaged item, the approach taken may be the customer to identify themselves as required (for example, by e-mail address) and scan the tag on the item itself before depositing it in the returns kiosk. If this approach is taken, the packaging may for example be fully or partly clear so that the return can be at least partially inspected before the return process has been completed.

At this point, the package is labelled and ready for return. In some embodiments, this may be done simply by using an appropriate two-stage (or multi-stage) mechanism in the parcel return section 20 to prevent access to the parcel collection well 22 when a return is made. It may however be desirable to control the parcel return section more strongly - this may be achieved, for example, by holding the parcel return section 20 in a normally closed state, and only opening the return section door 201 when an associated lock 2011 is opened, for example by scanning the optical code on the return label in response to a prompt on the touchscreen user interface 26.

Opening the return section door 201 may prompt activation of associated sensors such as a weight sensor 202 or an optical sensor 203 (such as a camera 2031) to determine whether a legitimate return has actually been made. This evaluation will typically be carried out by the returns server 2 operating on information returned from the return section sensors through the controller 10. The reading from the weight sensor 202 may be used to evaluate whether the return parcel weight is compatible with the item to be returned, and the reading from the optical sensor 203 may be used to determine whether the dimensions of the return item are appropriate. Video analytics may be used by video analytics system 16 to determine whether the return item appears to be as expected - this will be easier to achieve if clear packaging is used. While camera 2031 is indicated here as being associated with the return section, it may be used to view customer behaviour in interacting with the returns kiosk - activity that was assessed to be inconsistent with normal return behaviour could be identified at the video analytics system and flagged at the returns server 2, typically by augmenting a record relating to that return (which may, for example, be held in a database accessed by the returns server, the record being associated with the return identifier). Other information suggesting that the return may not be legitimate - for example, significant deviation from normal process timing - may be used in a similar way.

This may not be the end of the workflow for the user and the touchscreen user interface. Provision of a receipt may be achieved by a separate receipt printer (not shown), by printing a receipt together with the label, or electronically to a customer e-mail address or mobile telephone number. The refund process (described further below) associated with the return may be implemented by a later return to a customer bank account, or could be provided immediately, in which case refund options could be provided through the touchscreen user interface - for example, the user could be offered a refund in vouchers for spending in store, which may be an appropriate option for a returns kiosk located within a bricks and mortar store associated with the return. The user could be recommended an alternative product, or be presented with a workflow that allowed them to make an alternative product selection for reservation and collection. Whether or not the refund were to be made immediately, the customer could be provided with customised offers prompted by the nature of the refunded product. In general, the touchscreen user interface could be used as an advertising conduit when it was not being actively used for user return purposes, becoming customised to the specific customer during a returns process, and reverting to a general purpose advertising conduit when the customer interaction had ended.

This process can be further enhanced, and other benefits provided, if a returns system is adapted to interact with the relevant retailer's RFID platform. This will be particularly appropriate if the returns kiosk 1 is located in retailer premises. A first benefit of this is that the RFID code can be checked to see what kind of product is expected - for example, the video analytics system 16 may inspect for a blue jumper if the RFID tag associated with the returned product indicates that it is a blue jumper. RFID may also be used in retailer premises to check similar items - or the same item in a different size - actually in stock in that store.

One further possibility - not explicitly shown in Figure 1 - is for a payment card POS terminal (for example, a contact chip and PIN reader for payments performed according to EMV protocols) to be incorporated within the returns kiosk 1. If this is provided, then if relevant criteria are met for an acceptable return, an instant refund may be made to a customer account using customer card details provided through the POS terminal. This could be achieved by a workflow which offers "direct refund to customer account" as an option once the return is made, with a prompt to enter the customer card associated with an account to receive the refund when the customer requests this option..

When it has been determined at the returns server 2 that a customer return has been made and the returned product is waiting in the parcel collections well 22, a notification can be made to the staff terminal 3 that a parcel is waiting for collection - this may be by a message, or by a simple alert using any conventional mechanism for alerting at a mobile device. Messages and/or alerts may also be sent when attention is particularly needed from the user of the staff terminal 3 - for example, if the parcel collection well sensors indicate that the parcel collection well is almost full, or if the returns server 2 has identified that a time critical return has been received at the returns kiosk 1.

The returns server 2 has by this point identified a return outcome for the received return - this may have been indicated in an initial interaction between the returns server and the retailer server systems (for example, to indicate that the return could be recycled within the store rather than returned to a central warehouse), or may be determined by interactions after the return has been received at the kiosk (for example, if different logistics options are preferred depending on the time of day that the return is received). This return outcome is established by the returns server 2 with any logistics provider systems to be involved in the delivering of the returns outcome, and in particular is used to provide directions to the user of the staff terminal 3 for use in processing the return.

The user of the staff terminal 3, on reaching the returns kiosk 1 as a result of messages or alerts from the returns server 2 or otherwise, is able to open the NFC-enabled lock 721 and collect any parcels from the parcel collection well 22. On collecting a parcel, the user can use the staff terminal 3 to scan the code on the label - this will typically be part of a logistics workflow to indicate that a parcel has been collected. On scanning the code, the staff terminal 3 will then also communicate with the returns server 2 to obtain the return outcome for the parcel, or the next step in the logistics process needed to deliver that outcome. The user of the staff terminal 3 will then take the next step to deliver the parcel to the correct destination. At this point, the returns management process transitions to a standard logistics process (in, for example, returning the parcel to a central warehouse) or a retailer internal process (if the next step is to return the parcel to an in-store processing point).

While further processes relate to standard logistics processes or in-store processes, it will still be desirable to define a point at which the returns process is complete and can be logged as such at the returns server 2, so that a final status can be settled and the returns process can be evaluated and a record of progress and final status logged for later inspection if needed.

There will typically be a customer refund to be provided as a result of the returns process. This may not take place until the returns process is fully complete - for example, after inspection of the item by or on behalf of the retailer to determine that it is the correct item and in satisfactory condition. It may also be triggered by an earlier point in the process - for example, by posting of the labelled parcel into the returns kiosk 1. This would allow further interaction at the returns kiosk 1 - for example, if the returns kiosk 1 were located in retailer premises, then the returns kiosk 1 could print (on the label printer or a separate printer) a return receipt that could be exchanged as store credit.

Further embodiments may be provided within the spirit and scope of the invention as claimed.

## Claims

1. A returns kiosk for receiving and processing customer returns, comprising:
a customer user interface for a customer to enter a return identifier for a customer return;
a label printer to print a return specific label for the customer return from the return identifier;
a parcel posting mechanism to receive a customer return with an affixed return specific label, and a parcel collection well to store parcels posted through the parcel posting mechanism; and
a controller for control of the returns kiosk;
wherein the returns kiosk is adapted for communicating with a returns server for processing of customer returns.

2. The returns kiosk of claim 1, wherein the returns kiosk comprises a tablet computer retained within it, the tablet computer providing a touchscreen interface as the customer user interface.

3. The returns kiosk of claim 1 or claim 2, wherein the customer user interface comprises an optical code scanning system, wherein the return identifier is obtainable from an optical code to be scanned by the optical code scanning system.

4. The returns kiosk of any preceding claim, wherein the parcel posting mechanism comprises a lockable access door which is openable by scanning of an optical code printed on the return specific label.

5. The returns kiosk of any preceding claim, wherein the parcel posting mechanism comprises sensors for use in determining whether a valid return has been made, the sensors comprising at least one camera.

6. The returns kiosk of any preceding claim, wherein the parcel collection well is separately lockable with an NFC enabled lock.

7. The returns kiosk of any preceding claim, wherein the returns kiosk is adapted to communicate with the returns server to obtain information to print the return specific label from the return identifier.

8. The returns kiosk of any preceding claim, wherein the returns kiosk is adapted to provide returns kiosk state information to the returns server.

9. A customer returns processing system, comprising:
one or more returns kiosks as claimed in any of claims 1 to 8;
one or more handheld terminals adapted to run a returns process application; and
a returns server adapted to process customer returns by communicating with the returns kiosks to provide and receive customer return information and with the handheld terminals to provide customer return information.

10. The customer returns processing system of claim 9, wherein the returns server is adapted to determine a return outcome for a return.

11. The customer returns processing system of claim 9 or claim 10, wherein the customer returns processing system is adapted to notify a logistics system of a return, of the return outcome for the return, and of when the return has been identified at the handheld terminal.

12. A method of processing a customer return in a computerised returns system utilising a returns kiosk, comprising:
establishing a return identifier for a customer return;
at a returns kiosk, receiving the return identifier, printing a return specific label for the customer return based on the return identifier, and receiving a customer return with an affixed return specific label;
determining a return outcome for the customer return; and
sending a notification to a handheld terminal, wherein the notification indicates the returns kiosk where the customer return is held and the return outcome.

13. The method of claim 12, wherein the return identifier is stored within an optical code, and wherein receiving the return identifier at the returns kiosk comprises scanning the optical code.

14. The method of claim 12 or claim 13, wherein printing the return specific label comprises printing a return specific optical code on the return specific label.

15. The method of claim 14, wherein the handheld terminal is adapted to retrieve the return outcome by scanning the return specific optical code.

## Amended claims

### Amended claims in accordance with Rule 137(2) EPC.

1. A returns kiosk (1) for receiving and processing customer returns, comprising:
a customer user interface for a customer to enter a return identifier for a customer return;
a label printer (15) to print a return specific label for the customer return from the return identifier;
a parcel posting mechanism (20) to receive a customer return with an affixed return specific label, and a parcel collection well (22) to store parcels posted through the parcel posting mechanism; and
a controller (10) for control of the returns kiosk;
wherein the returns kiosk (1) is adapted for communicating with a returns server (2) for processing of customer returns.

2. The returns kiosk of claim 1, wherein the returns kiosk (1) comprises a tablet computer (14) retained within it, the tablet computer (14) providing a touchscreen interface as the customer user interface.

3. The returns kiosk of claim 1 or claim 2, wherein the customer user interface comprises an optical code scanning system, wherein the return identifier is obtainable from an optical code to be scanned by the optical code scanning system.

4. The returns kiosk of any preceding claim, wherein the parcel posting mechanism (20) comprises a lockable access door which is openable by scanning of an optical code printed on the return specific label.

5. The returns kiosk of any preceding claim, wherein the parcel posting mechanism (20) comprises sensors for use in determining whether a valid return has been made, the sensors comprising at least one camera.

6. The returns kiosk of any preceding claim, wherein the parcel collection well (22) is separately lockable with an NFC enabled lock.

7. The returns kiosk of any preceding claim, wherein the returns kiosk (1) is adapted to communicate with the returns server (2) to obtain information to print the return specific label from the return identifier.

8. The returns kiosk of any preceding claim, wherein the returns kiosk (1) is adapted to provide returns kiosk state information to the returns server (2).

9. A customer returns processing system, comprising:
one or more returns kiosks (1) as claimed in any of claims 1 to 8;
one or more handheld terminals (3) adapted to run a returns process application; and
a returns server (2) adapted to process customer returns by communicating with the returns kiosks (1) to provide and receive customer return information and with the handheld terminals (3) to provide customer return information.

10. The customer returns processing system of claim 9, wherein the returns server (2) is adapted to determine a return outcome for a return.

11. The customer returns processing system of claim 9 or claim 10, wherein the customer returns processing system is adapted to notify a logistics system of a return, of the return outcome for the return, and of when the return has been identified at the handheld terminal (3).

12. A method of processing a customer return in a computerised returns system utilising a returns kiosk (1), comprising:
establishing a return identifier for a customer return;
at a returns kiosk (1), receiving the return identifier, printing a return specific label for the customer return based on the return identifier, and receiving a customer return with an affixed return specific label;
determining a return outcome for the customer return; and
sending a notification to a handheld terminal (3), wherein the notification indicates the returns kiosk where the customer return is held and the return outcome.

13. The method of claim 12, wherein the return identifier is stored within an optical code, and wherein receiving the return identifier at the returns kiosk (1) comprises scanning the optical code.

14. The method of claim 12 or claim 13, wherein printing the return specific label comprises printing a return specific optical code on the return specific label.

15. The method of claim 14, wherein the handheld terminal (3) is adapted to retrieve the return outcome by scanning the return specific optical code.
